# EUROPÄISCHE PATENTSCHRIFT

(11) **EP 1 483 032 B1**
(45) Veröffentlichungstag und Bekanntmachung des Hinweises auf die Patenterteilung: **28.03.2007**
(21) Anmeldenummer: 03743783.7
(22) Anmeldetag: 24.02.2003
(51) Int. Cl.: B01D 36/04, B01D 37/02

(54) **VERFAHREN ZUR KONTINUIERLICHEN FILTRATION EINER ROHSOLE FÜR DIE VERWENDUNG IN DER CHLOR-ALKALI ELEKTROLYSE**
METHOD FOR CONTINUOUSLY FILTERING RAW BRINE FOR USE IN CHLOR-ALKALI ELECTROLYSIS
PROCEDE DE FILTRATION CONTINU D'UNE SAUMURE BRUTE DESTINEE A ETRE UTILISEE DANS L'ELECTROLYSE CHLORE-ALCALI

(30) Priorität: 08.03.2002 CH 403022002
(43) Veröffentlichungstag der Anmeldung: 08.12.2004
(73) Patentinhaber: DRM, DR. MÜLLER AG, CH-8708 Männedorf ZH (CH)
(72) Erfinder: PFEIFFER, Martin, CH-8730 Uznach (CH)
(86) Internationale Anmeldenummer: PCT/CH2003/000137
(87) Internationale Veröffentlichungsnummer: WO 2003/076045

(56) Entgegenhaltungen:
- DE-B- 1 175 650
- US-A- 5 223 153
- US-A- 5 290 454

## Beschreibung

Die Erfindung betrifft ein Verfahren zur kontinuierlichen Filtration einer Rohsole für die Verwendung in der Chlor-Alkali Elektrolyse, mittels eines rückspülbaren Druckfilters.

im Zuge der Umstellung auf Membranzellentechnologie in der Chlor-Alkali Elektrolyse sind die Anforderungen an die Solequalitäten erheblich gestiegen. Zum Schutz von nachgeschalteten Anlagenkomponenten und Elektrolysezellen müssen u.a. feste, suspendierte Verunreinigungen bis auf ein sehr tiefes Niveau entfernt werden. Diese Fest/Flüssig-Trennaufgabe wird heute häufig über mehrstufige und entsprechend aufwendige Trennverfahren bewerkstelligt, wobei vor allem bei der letzte Trennstufe hohe Anforderungen an die Zuverlässigkeit gestellt werden.

Aufgrund der hohen investitions- und Betriebskosten für solche Anlagen gewinnen alternative Konzepte, die eine Verfahrensvereinfachung ermöglichen, zunehmend an Bedeutung, Zudem spielt die Tatsache eine Rolle, dass es sich bei vielen Installationen um Umstellbetriebe handelt, die vorhandene veraltete Elektrolysen durch die effizienteren und umweltfreundlicheren Membrananlagen ersetzen. In diesen Fällen wird eine weitgehende Nutzung vorhandener Trennapparate angestrebt. Auch sind hier die örtlichen Gegebenheiten, wie Infrastruktur, Platzbeschränkungen usw. zu berücksichtigen. Ebenfalls ist die Stillegung oder Demontage vorhandener Trennapparate (vor allem grossvolumige Eindicker) häufig gar nicht wünschenswert oder mit sehr hohem Aufwand verbunden.

Rohsole enthält unlösliche suspendierte Feststoffe, die aus Lösebecken sowie aus Fällreaktionen herrühren. Typische Bestandteile einer Rohsole sind Bariumsulfat, Kalziumsulfat, Kalziumcarbonat. Metallhydoxide sowie Gangart. Die Konzentration sowie Zusammensetzung der Verunreinigungen hängt vor allem von der Salzquelle ab und kann je nach Standort stark schwanken. Typische Konzentrationen für Solen aus Steinsalzen europäischer Herkunft liegen bei 300-1500 ppm suspendierte Feststoffe.
Durch die Dekantierung gelangen überwiegend feine Partikel bzw. kleine Agglomerate in den Überlauf, während im Unterlauf überwiegend grössere Partikel bzw. Agglomerate zu finden sind. Aufgrund dieser Tatsache gestaltet sich die direkte Filtration des Überlaufs auf rückspülbaren Druckfiltern schwierig bzw. ist sogar zum Teil unmöglich. Die feinen Partikel neigen dazu, auf dem Filtermedium schnell eine dünne und undurchlässige Schicht zu bilden. Sofortiger Druckanstieg und niedrige. Filtrations-Geschwindigkeiten sind die Folge. Zudem lässt sich die Partikelschicht schlecht entfernen, was zu einer stark eingeschränkten Rückspülfähigkeit (Regenerierbarkeit) des Filtermediums führt.

Aus der US-A-4 443 346 ist ein Verfahren zur Reinigung eines rückspülbaren Druckfilters der Art bekannt, weiches beispielsweise zum Einsatz beim erfindungsgemässen Verfahren geeignet ist.

Die US-A-3 497 452 beschreibt ein Verfahren unter Verwendung von Filterhilfsmitteln, wobei ein Teil des Filtrates zur weiteren Filtration wiederverwendet wird, bei der Entfernung von Feststoffen aus Lösungsmitteln der chemischen industrie.

Die US-A-5 290 454 beschreibt ein Verfahren zur Filtration von Abwasser aus Helzschleifernen.

Bei den bekannten Verfahren wird zwar die Bildung und Entfernung eines Filterkuchens beschrieben, nicht jedoch wie oder in welcher Form das Filterhilfsmittel eingesetzt wird. Bekanntenweise werden als Filterhilfsmittel prozessfremde Substanzen mineralischen (z.B. Perlite, Diatomite) oder organischen (z.B. Zellulose) Ursprungs in aufgeschlämmter Form der Trübe vor dem Filter zudosiert. Nachteil ist, dass bei den bekannten Anwendungen neues Filterhilfsmittel zudosiert werden muss und als zusätzlicher Reststoff bei der Entsorgung anfällt.

Aufgabe der Erfindung ist es, ein verbessertes Verfahren zur Filtration von Solen in der Chlor-Alkali Chemie zur Verfügung zu stellen, wobei als Filterhilfe ein im Prozess selbst anfallender Stoffstrom Verwendung findet.

Aufgabe der Erfindung ist es, ein verbessertes vollautomatisches Verfahren zur Filtration von Sole zur Verfügung zu stellen, welches für die Chlor-Alkali Elektrolyse geeignet ist.

Diese Aufgabe wird erfindungsgemäss dadurch gelöst, dass die Rohsole in einer ersten Stufe über einen Dekanter in einen feststoffarmen Teilstrom als Klarsole und einen feststoffreichen Teilstrom zerlegt, und in einer zweiten Stufe ein Teil des feststoffreichen Teilstroms der Klarsole als Filterhilfsmittel dem Druckfilter zudosiert wird.

Während der Filtration bilden die gröberen Partikel des feststoffreichen Teilstroms einen porösen und gut durchlässigen Filterkuchen. Problematische Feinpartikel werden eingelagert und zuverlässig zurückgehalten. Dem Grobkorn des feststoffreichen Teilstroms kommt dabei die Funktion eines Fliterhilfsnilttels zu: Langsamer Druckanstieg, und hohe Filtrationsgeschwindigkeiten sind die Folge. Die Partikelschicht erreicht eine Dicke von ca. 1-2 mm und lässt sich leicht entfernen, was zu einer guten Rückspülfähigkeit (Regenerierbarkeit) des Filtermediums führt. Durch die Verwendung geeigneter, feinporiger Filtermedien wird ein hoher Feistoffrückhalt gewährleistet.

Die Dosierung des feststoffreichen Teilstroms stellt einen weitgehend frei wählbareren Parameter dar und erhöht die Flexibilität der Filtration gegenüber Schwankungen in der Feststoffzusammensetzung.

Dadurch, dass die zu filtrierende Klarsole vor dem Eintritt in den Druckfilter mit einem Teilstrom des Dekanter-Unterlaufs versetzt wird, erfolgt eine Verschiebung der Partikelgrössenverteilung in den gröberen Bereich. Die Verschiebung der Partikelgrössenverteilung im Zusammenwirken mit rückspülbaren Druckfiltern bietet erhebliche technische sowie wirtschaftliche Vorteile:
- Steigerung der Filtrationsleistung, d.h. Einsparung von Filterfläche
- Verbesserte Festoffablösung vom Filtermedium
- Reduzierte Verstopfungsgefahr des Filtermediums
- Unempfindlichkeit gegenüber schwankender Feststoffzusammensetzung
- Erhöhte Flexibilität und Zuverlässigkeit der Filtrationsstufe

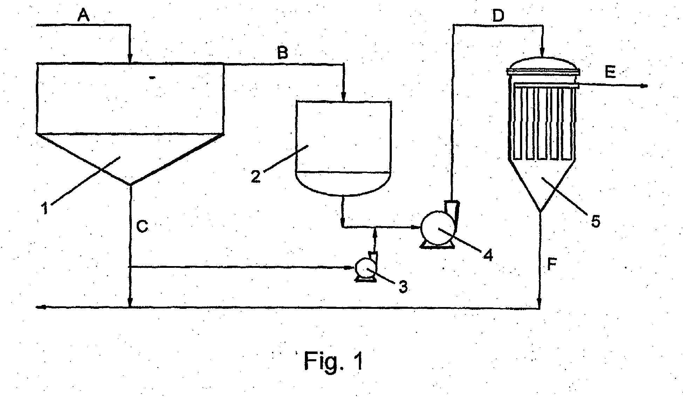

Das Verfahren soll anhand eines Schemas als einzige Figur 1 näher erläutert werden.

In Fig. 1 ist mit dem Bezugszeichen 1 ein Behälter mit zu reinigender Rohsole A bezeichnet. Der Behälter 1 ist über eine Leitung verbunden, welche eine Klarsole B als Überlauf enthält und mit einem zweiten Behälter 2 verbunden ist. Aus dem unteren Teil des Behälters 1 führt eine Leitung, welche feststoffreichen Schlamm C enthält, der teilweise zu einer nicht gezeigten Deponie führt. Der andere Teil des feststoffreichen Schlamms führt zu einer Dosierpumpe 3. Der untere Teil des Behälters 2 ist über eine Leitung mit einer Pumpe 4 verbunden. Die Druckleitung der Pumpe 4 enthält eine Mischsole D und führt auf ein rückspülbares Druckfilter 5, mit einer Leitung E für die Reinsole und eine Leitung F für die Abschlämmung.

Im Betrieb wird die Rohsole A im Behälter 1 zunächst einer Vorklärung unterzogen, wobei in der Regel Eindicker, sogenannte statische Dekanter, zum Einsatz kommen. Aufgrund des grossen Puffervolumens (häufig mehrere tausend Kubikmeter) und der daraus resultierenden langen Verweilzeit tragen diese Dekanter zur Betriebssicherheit von Elektrolyseanlagen bei. Um die Sedimentationseigenschaften der Feststoffe zu verbessern, wird der Rohsole in der Regel ein Flockungshilfsmittel (z.B. Polyelektrolyt) zugegeben.
Die Rohsole A wird im Behälter 1 in eine feststoffarme Klarsole B und einen festoffreichen Unterlauf C aufgetrennt. Die Klarsole B enthält typischerweise noch Feststoffe im Bereich von 30-100 ppm. Ein Teil des festsstoffreichen Unterlaufs C wird der Klarsole B dosiert zugegeben und somit eine Mischsole D erzeugt, die dem Filter 5 über die Pumpe 4 zugeführt wird. Die Zugabe des Unterlaufs kann an verschiedenen Stellen erfolgen, entweder saug- oder druckseitig der Pumpe 4 oder auch in den Behälter 2, falls eine Rühreinrichtung vorhanden ist.

Das Druckfilter 5 erzeugt ein nahezu feststofffreies Filtrat E, wobei die geforderten Ablaufwerte in der Regel ohne weitere Nachbehandlung unterschritten werden (0.5-1 ppm). Der zurückgehaltene Feststoff wird als eingedickter Schlamm F intermittierend ausgetragen und zusammen mit dem Unterlauf des Eindickers; z.B. einer nachgeschalteten Entwässerung zugeführt.

Die Erfindung soll anhand eines Ausführungsbeispiels und eines Vergleichsbeispiels näher beschrieben werden. In beiden Fällen wird von der Behandlung von 100 m³/h Rohsole mit einem Feststoffgehalt von 1000 ppm ausgegangen.

### Ausführungsbeispiel 1

| Solestrom | Rohsole | Klarsole | Dickschlamm | Mischsole | Reinsole | Abschlämmung |
|---|---|---|---|---|---|---|
| Kennzeichen | A | B | C | D | E | F |
| Konzentration (ppm) | 1000 | 50 | 150000 | 250 | 0.5 | 150000 |
| Verhältnis der Feststoffkonzentration (Strom D/B) | | | | 5 | | |
| Spezifische Filterleistung Druckfilter 5 (l/m2×h) | | | | 1000 | | |
| Erforderliche Filterfläche Druckfilter 5 (m2) | | | | 100 | | |

### Ergebnis:

Nach Beginn des Betriebs mit Zudosierung konnte eine dauerhafte Steigerung der Filtrationsleistung um den Faktor 5 - 6 , festgestellt werden. Der Dekanterzunterlauf wurde dabei in verschienen Verhältnissen zudosiert. Ein stabiler und zuverlässiger Betrieb konnte bei Verhältnissen von 5-10:1, bezogen auf die Feststofffracht beobachtet werden, d.h. die Feststoffkonzentration im Zulauf D zum Filter 5 lag um das 5-10- fache höher als diejenige der Klarsole B. Die Filtratqualität lag deutlich unter 1 ppm, grösstenteils wurde ein Wert von 0.5 ppm erreicht.

### Vergleichsbeispiel (ohne Zudosierung des Dekanterzunterlaufs.)

| Solestrom | Rohsole | Klarsole | Dickschlamm | Mischsole | Reinsole | Abschlämmung |
|---|---|---|---|---|---|---|
| Kennzeichen | A | B | C | - | E | F |
| Konzentration (ppm) | 1000 | 50 | 150000 | - | 0.5 | 150000 |
| Verhältnis der Feststoffkonzentration (Strom D/B) | | | | - | | |
| Spezifische Filterleistung Druckfilter 5 (l/m2×h) | | | | 200 | | |
| Erforderliche Filterfläche Druckfilter 5 (m2) | | | | 500 | | |

### Ergebnis:

Es zeigt sich, dass aufgrund der niedrigen Leistung eine Filtration unter wirtschaftlichen Gesichtspunkten unmöglich ist. Zudem war eine deutliche Verstopfungsneigung festzustellen, die sich an kontinuierlich abnehmender Filtrationsleistung zeigte.

## Patentansprüche

1. Verfahren zur kontinuierlichen Filtration einer Rohsole (A) für die Verwendung in der Chlor-Alkali Elektrolyse, mittels eines rückspülbaren Druckfilters (5), **dadurch gekennzeichnet, dass** die Rohsole (A) in einer ersten Stufe über einen Dekanter (1) in einen feststoffarmen Teilstrom, als Klarsole (B) und einen feststoffreichen Teilstrom (C) zerlegt, und in einer zweiten Stufe ein Teil des feststoffreichen Teilstroms (C) der Klarsole (B) als Filterhilfsmittel dem Druckfilter (5) zudosiert wird.

2. Verfahren nach Anspruch 1, **dadurch gekennzeichnet, dass** die Dosierung des feststoffreichen Teilstroms (C) direkt der Klarsole (B) gesteuert zudosiert wird.

3. Verfahren nach Anspruch 1, **dadurch gekennzeichnet, dass** als Druckfilter ein rückspülbarer Druckfilter(5) verwendet wird.

## Claims

1. Method for continuously filtering raw brine (A) for use in Chloralkali electrolysis, by means of a backwashing pressure filter (5), **characterised in that** in a first stage, the raw brine (A) is separated into a partial flux with a low solids content as clear brine (B) and a partial flux (C) with a high solids content via a decanter (1), and in a second stage, some of the partial flux (C) of the clear brine (B), which has a high solids content, is added to the pressure filter (5) as an auxiliary filtering means.

2. Method according to claim 1, **characterised in that** the dosage of the partial flux (C) with a high solids content is added directly to the clear brine (B) in a controlled manner.

3. Method according to claim 1, **characterised in that** a backwashing pressure filter (5) is used as a pressure filter.

## Revendications

1. Procédé pour filtrer en continu une saumure brute (A) pour l'utilisation dans l'électrolyse chloro-alcali, au moyen d'un filtre-presse pouvant être lavé à contre courant (5), **caractérisé en ce que** dans une première étape, la saumure brute (A) est partagée, via un décanteur (1), en un flux partiel à faible teneur en matière solide en tant que saumure claire (B) et un flux partiel (C) teneur élevée en matière solide, et dans une seconde étape, une partie du flux partiel (C) à teneur élevée en matière solide est ajoutée de manière dosée à la saumure claire (B) en tant qu'aide de filtration pour le filtre-presse (5).

2. Procédé selon la revendication 1, **caractérisé en ce que** l'addition dosée du flux partiel (C) à teneur élevée en matière solide est réalisée de manière commandée directement dans la saumure claire (B).

3. Procédé selon la revendication 1, **caractérisé en ce** 20 qu'un filtre-presse pouvant être lavé à contre courant (5) est utilisé en tant que filtre-presse.
